# EUROPEAN PATENT APPLICATION

(11) **EP 1 850 562 A1**
(43) Date of publication of application: **31.10.2007**
(21) Application number: 07106178.2
(22) Date of filing: 13.04.2007
(51) Int. Cl.: H04L 29/12

(54) **Apparatus and method for structuring IP identification packets and alloting IP addresses**

(30) Priority: 25.04.2006 KR 20060037274
(71) Applicant: SAMSUNG ELECTRONICS CO., LTD., Suwon-si Gyeonggi-do 442-742 (KR)
(72) Inventor: An, Tae-yun, Yongin-si, Gyeonggi-do (KR)
(74) Representative: Perkins, Dawn Elizabeth

(57) **Abstract**

Provided is an apparatus and method for structuring IP identification packets and allotting IP addresses. The apparatus includes a IP control unit which reads out an IP address of a predetermined device contained in the IP identification packet, and determines if it is identical to IP address of the device that received the IP identification packet, and an IP-allotting unit which re-allots an IP address of the device that received the IP identification packet when the read IP address and the IP address of the device that received the IP identification packet are identical.

## Description

Apparatuses and methods consistent with the present invention relate to structuring internet protocol (IP) identification packets and allotting IP addresses, and more particularly, preventing IP collision among devices in advance by transmitting a packet containing an IP address during initialization of a network, thereby providing efficient IP communication.

With the development of digital audio and video (A/V) processing techniques, various A/V devices, such as digital TV, set-top boxes, digital versatile disk (DVD) players, and digital amplifiers, are installed and used in homes and offices. A user in the home or office can conveniently control these devices using a remote control unit or the like. Accordingly, technology has been developed that connects a plurality of A/V devices to one another for systematization so as to allow the user to conveniently control the A/V devices.

As a part of this technology, an eXpandible Home Theater (XHT) specification, which is middleware for A/V home networking, has been recently developed. XHT technology is a digital TV-oriented home network solution developed by Samsung Electronics Co., Ltd. The XHT specification has been adopted as the standard of Consumer Electronics Association (CEA).

XHT technology controls multiple digital TVs as well as A/V devices connected to the digital TVs by use of IEEE 1394 cables which can stably transfer a plurality of high definition (HD) signals and Internet protocols. With XHT technology, a user can watch a digital broadcast in another room using the function for receiving the digital broadcast of the digital TV in the living room.

A cheap network interface unit (NIU) using XHT technology is in a form of a memory card. Therefore, required changes to receiving systems, such as ground wave, satellite, and cable systems, can be easily performed, which reduces the economic burden of broadcast industrialists. In particular, XHT technology enables various kinds of portal services through the built-in browser of the digital TV.

The XHT system is based on the IEEE 1394 network, and basically performs the following functions: transmission of data streams using IEC61883, control between apparatuses using AV/C, and GUI (graphical user interface) transmission based on HTTP (hypertext transfer protocoI)/CE A2027.

The XHT system has an IEEE 1394 bus. The IEEE 1394 network supports an asynchronous transmission mode in which the integrity of transmission is ensured, and an isochronous transmission mode in which real-time transmission is ensured. In addition, the XHT system transmits data streams through the IEEE 1394 bus according to IEC61883. IEC 61883 is a protocol for transmitting data streams in real time over the IEEE 1394 network Therefore, the transmission type and protocol depend on the type of streams.

A home network control protocol (HNCP) is a protocol for allotting IP addresses over the IEEE 1394 network The HNCP-related information can be obtained, when EIA775.1 of the content of the configuration ROM is inspected. For example, the address of a configuration ROM is in the range of Ox400 to Ox800, and is defined by IEEE 1394 core Control Status Register (CSR). Therefore, the address used when an apparatus on the network transmits a packet is checked to determine of it is in the range of 0x400 to 0x800. When the address is in the range of 0x400 to 0x800, the packet is determined as a configuration ROM packet.

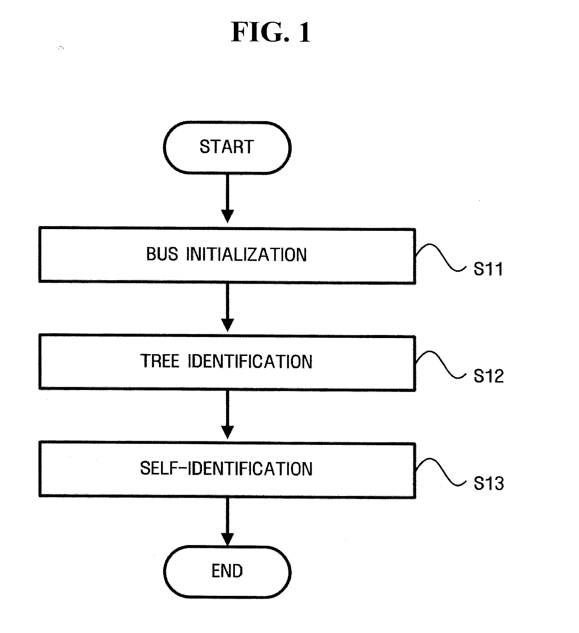

Figure 1 illustrates initialization of the conventional IEEE 1394 network

Cable configuration is accomplished in three phases: bus initialization (S11), tree identification (S12), and self-identification (S13).

During S11, whenever a new device is connected to the bus, a bus reset signal instructs all devices into a special state that clears all previous topology information. At this time, the connection status of each port is stored internally by the physical layer.

During S12, a network is translated into a tree topology. The tree topology has a structure in which physical device identifications are allotted to each device. At this time, one device is designated as a root in the tree topology. The device closely connected to the root device is called a parent device, and the device remotely connected to the root device is called a child device. Therefore, when the tree identification is completed, the tree topology is composed of ports connected to devices called parents or children ("child").

During S13, each device selects a unique physical identification, or a device address. That is, the self-identification process uses a deterministic procedure in which a device selects a physical identification number depending on its location in a tree structure. The root device gives control of the bus to the device attached to its lowest numbered connected port. When the device attached to the port and all of its children have been identified, a signal is sent to the root device indicating that the identification process is finished. The root then transmits control to its next highest numbered connected port, and the process repeats. The physical identification number is simply a count of the number of times that a device receives self-identification information from other devices before transmitting its own identification number.

Meanwhile, the cable architecture supports data transfer rates of 100, 200, and 400 Mbps, and 100 Mbps is designated as the base rate. Each device transmits speed capabilities as part of its self-identification packet. Each node exchanges speed information including its parent device at the end of the device's self-identification process. This speed capability is recorded by both devices. Since a device has already received self-identification information from each of its children before transmitting its own self-identification information to its parent, the device has a complete record of the speed capabilities of all devices attached to each of its connected ports.

The self-identification packet contains information on the self-identification packet identifier, the physical device identifier of the sender (source), the speed capabilities of the sender, the worst-case repeater data delay, power consumption and source characteristics, port status, and other pertinent information regarding the characteristics of the transmitting device.

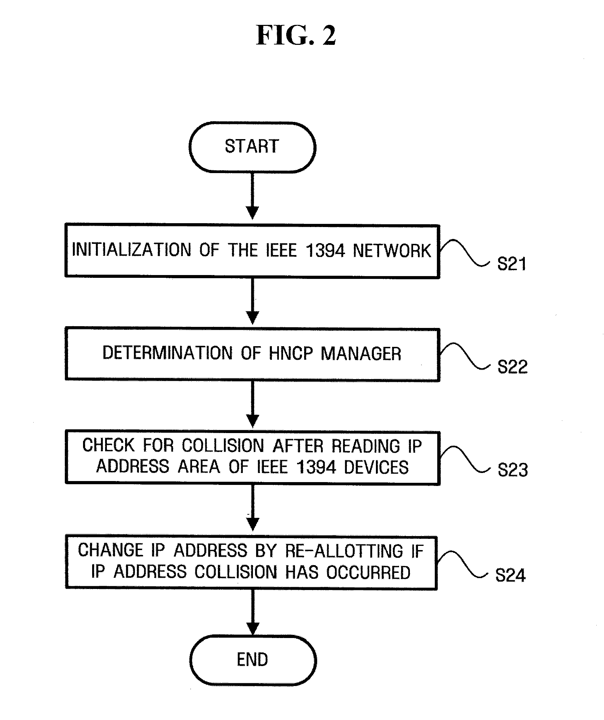

Figure 2 illustrates re-allotment of the IP address when IP addresses collide among the conventional devices.

First, the re-allotment of an IP address is accomplished in three phases: bus initialization (S11), tree identification (S12), and self-identification (S21), like the initialization of the IEEE 1394 network illustrated in Figure 1.

Next, the devices determine a HNCP manager by using a globally unique identifier (GUID) stored in the configuration ROM S22. For example, in the HNCP, the device with the greatest value obtained by calculating a reverse bit of the GUID (for example, 64 bit unique ID) is designated as a manager.

After the HNCP manager has been determined, it checks whether the IP collision exists after reading IP address area of IEEE 1394 devices supporting IP communication (S23). The IP address is stored in a nonvolatile memory (such as, a ROM) fixed in a device, and it can be used to participate in the IEEE 1394 network The device designates the IP address in a memory area so that other devices can read or translate the IP address.

The HNCP manager is translated by allotting the IP address if collision of the IP address among devices occurs (S24).

More detailed description of the process illustrated in Figures 1 and 2 can be obtained with reference to the contents disclosed in the IEEE 1394 specification (IEEE 1394, IEEE 1394.a, and others) and in the EIA 775-1 specification.

As illustrated, the re-allotment of the IP address requires: initializing the network of Figure 1, determining HNCP manager, and checking whether collision exists by instructing the determined HNCP manager to read the IP address area of the devices. Therefore, if IP collision among devices occurs, a considerable amount of time is delayed until the collision is removed by re-allotting the IP address, and network traffic increases by re-allotting the IP address. The IP address re-allotting process is too complicated to be implemented.

Therefore, a technology of preventing collision of IP addresses in advance, and ensuring the devices to perform stable IP communication is required.

An aspect of the invention is to provide an apparatus and method for structuring IP identification packets and allotting IP addresses.

This and other aspects and features of the present invention will become clear to those skilled in the art upon review of the following description, attached drawings and appended claims.

According to an aspect of the invention, there is provided an apparatus for structuring IP identification packet including a configuration unit which comprises an IP identification packet containing an IP address of a device, and a first transmitting/receiving unit which broadcasts the IP identification packet to a device on a network during the initialization of the network

According to another aspect of the invention, there is provided an apparatus for allotting IP addresses addresses including an IP control unit which reads out IP address of a predetermined device contained in the IP identification packet, and determines if it is identical to IP address of the device that received the IP identification packet, and an IP-allotting unit which re-allots IP address of the device that received the IP identification packet when the read IP address and the IP address of the device that received the IP identification packet are identical.

According to an aspect of the invention, there is provided a method of structuring IP identification packet including: generating an IP identification packet containing IP address of a device, and broadcasting the IP identification packet to a device on the network during the initialization of the network

According to another aspect of the present invention, there is provided a method of allotting IP addresses addresses including: reading out IP address of a predetermined device contained in the IP identification packet and determining if it is identical to the IP address of the device that received the IP identification packet, and re-allotting the IP address of the device that received the IP identification packet when the read IP address and the IP address of the device that received the IP identification packet are similar.

The above and other features of the present invention will become more apparent by describing in detail exemplary embodiments thereof with reference to the attached drawings in which:
Figure 1 illustrates initialization of the conventional IEEE 1394 network;
Figure 2 illustrates re-allotment of an IP address when IP addresses collide among the conventional devices;
Figure 3 is a block diagram of an apparatus for structuring an IP identification packet according to an exemplary embodiment of the present invention;
Figure 4 is a block diagram of an apparatus for allotting an IP address according to an exemplary embodiment of the present invention;
Figure 5 is a flowchart illustrating a method of structuring IP identification packet and allotting an IP address according to an exemplary embodiment of the present invention;
Figures 6A and 6B illustrates configuration of an IP identification packet according to an exemplary embodiment of the present invention;
Figure 7 is a flowchart illustrating a method of structuring IP identification packets and allotting IP addresses according to a first exemplary embodiment of the present invention;
Figures 8A and 8B illustrates configuration of self-identification packet according to a first exemplary embodiment of the present invention; and
Figure 9 illustrates an embodiment of process of re-allotting IP using IP identification packet according to an exemplary embodiment of the present invention.

Features and aspects of the present invention and methods of accomplishing the same may be understood more readily by reference to the following detailed description of exemplary embodiments and the accompanying drawings. The aspects of the present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims.

The present invention will be described according to exemplary embodiments of the invention hereinafter with reference to flowchart illustrations of methods.

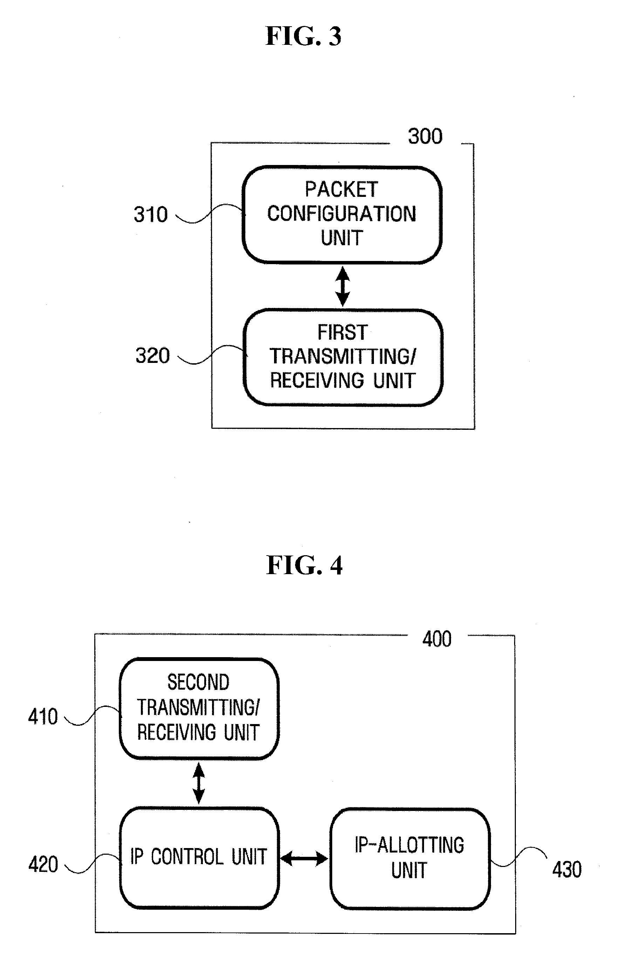

Figure 3 is a block diagram of an apparatus for structuring an IP identification packet according to an exemplary embodiment of the present invention.

The apparatus for structuring IP identification packet 300 includes a packet-structuring unit 310 and a first transmitting/receiving unit 320.

The packet-structuring unit 310 generates an IP identification packet containing an IP address of a device.

The IP identification packet is configured during the initialization of various networks such as an IEEE 1394 network, Ethernet network, wireless LAN, and others, and is broadcast to a device on the network The device on the network receives the IP identification packet, checks whether the IP addresses of both devices are the same, and allots IP addresses so that better IP communication can be performed between the devices. For example, when initializing an IEEE 1394 network, the IP identification packet can be configured by including an IP address of a device in the self-identification packet illustrated in Figure. 1. The device uses XHT technology.

The IP address is an IP address of the device which broadcasts the IP identification packet, which can be included in a critical field of a plurality of IP identification packets as a divided address with a predetermined length. For example, a 32-bit IP address of a device can be included in a plurality of IP identification packets, divided into a 16-bit IP address in the upper area, and a 16-bit IP address in the bottom area.

The IP identification packet with a predetermined length is divided into a plurality of IP identification packets, and it may be broadcast in a sequential order. Accordingly, the first transmitted IP identification packet may include the information on if the rest of the IP identification packets which follow exist. For example, an IP identification packet can be broadcast in a sequential order into 32 bit addresses on the IEEE 1394 network, and may include information on if the rest of the IP identification packets which follow exist.

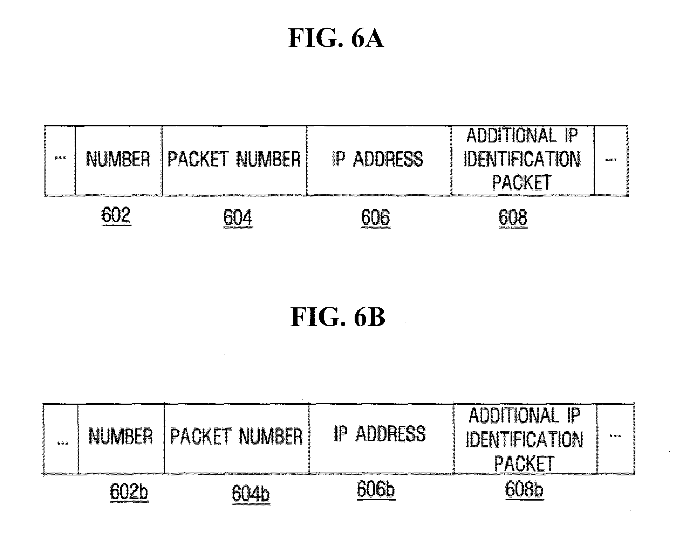

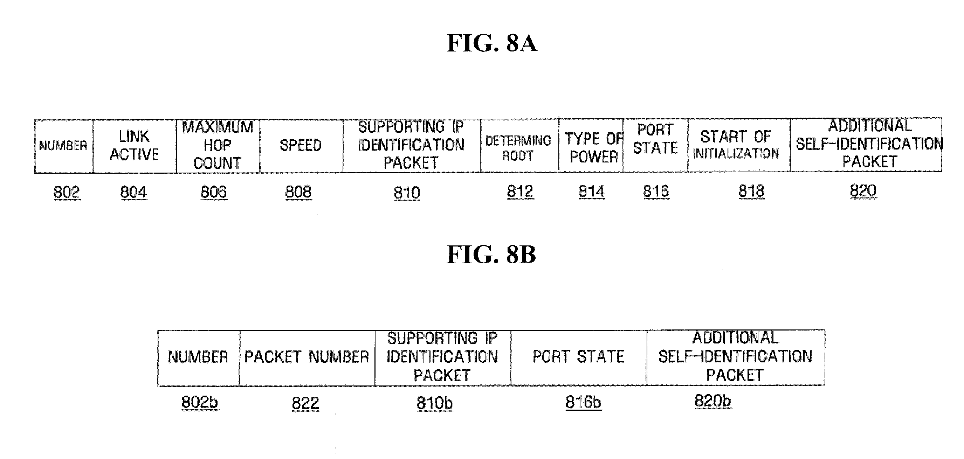

The configuration of the IP identification packet and self-identification packet is illustrated in Figures 6 and 8.

A first transmitting/receiving unit 320 broadcasts the IP identification packet containing IP address of a device to a device on the network

The IP identification packet is configured during the initialization of various networks, such as an IEEE 1394 network, Ethernet network, wireless LAN, and others, and is broadcasted to a device on a network The initialization of the network may occur in such a case where a new device is inserted or detached in configuration of network, when the IP identification packet containing an IP address, details the IP address and other various basic information about the new device (for example, a port number or a device number), is broadcast to devices on the network. A device on the network compares its IP address and the IP address in the received IP identification packet to determine whether an IP address collision has occurred. As a result of the determination, if they are identical, it re-allots (changes) its IP address for better IP communication between devices.

For example, during initialization of the IEEE 1394 network illustrated in Figure. 1, it is desirable to transmit the IP identification packet during S13, when the device may be a device depending on the XHT standard. Therefore, after initialization of the conventional IEEE 1394 network, instead of performing the procedures: determining HNCP manager, reading IP address area of IEEE 1394 devices in which the device determined as HNCP manager supports IP communication, and checking if an IP collision occurs, the IP address collision between devices can be immediately determined during initialization of the IEEE 1394 network

Network traffic can be reduced by dividing the transmission of the 32-bit IP identification packet into two transmissions. That is, the IP address of the device which broadcasts a complete IP identification packet can be obtained, through methods including: dividing the IP address of the device which broadcasts an IP identification packet into a 16 bit address to be structured in an IP identification packet, and twice transmitting the IP identification packet to the device on the network.Figure 4 is a block diagram of an apparatus for allotting IP addresses according to an embodiment of the present invention.

An apparatus for allotting IP addresses 400 includes a second transmitting/receiving unit 410, an IP control unit 420, and an IP-allotting unit 430.

The second transmitting/receiving unit 410 receives an IP identification packet containing IP address of a device.

The IP identification packet is configured during the initialization of various networks such as an IEEE 1394 network, Ethernet network, wireless LAN, and others, and transmitted and received between devices on the network For example, during initialization of the IEEE1394 network, if the IP identification packet is transmitted, including the IP address of the device in the self-identification packet illustrated in Figure 1, the device on the network receives IP identification packet and performs checking IP duplication between devices and allotting IP, for better IP communication between devices.

As illustrated in Figure 3, the IP address is an IP address of the device that broadcasts an IP identification packet, and may be included in the filed of a plurality of IP identification packets as a divided address into a predetermined length. For example, a 32-bit IP address of a device can be included in a plurality of IP identification packets, divided into a 16-bit IP address in the upper area and a 16-bit IP address in the bottom area. Therefore, the device which received the IP identification packet through a second transmitting/ receiving unit 410 can obtain a complete 32-bit IP address from a plurality of IP identification packets.

It is desirable to broadcast the IP identification packet with a predetermined length, divided into a plurality of IP identification packets, in a sequential order. Accordingly, the first transmitted IP identification packet may include the information on if the IP identification packets which follow exist. For example, an IP identification packet can be broadcast in a sequential order as 32 bits on an IEEE 1394 network, and may include information on if the rest of the IP identification packets which follow exist, when transmitted to a plurality of IP identification packets.

The IP control unit 420 reads out the IP address of the device included in the IP identification packet, and determines if it is identical to the IP address of the device that received the IP identification packet.

The device which received IP identification packet reads out the IP address of the device that broadcast the IP identification address included in the IP identification packet, and determines if the address is identical to its IP address. For example, after obtaining the IP address of the device which broadcast IP identification packet, it is compared to the IP address of the device which received IP identification packet to determine if they are identical.

The IP-allotting unit 430 re-allots the IP address of the device which received the IP identification packet if the read IP address is identical to the IP address of the device which received the IP identification packet.

For example, on the IEEE 1394, the IP address was changed (re-allotted) through the methods in the conventional art: determining HNCP manager, checking if IP address collision exists by reading IP address area, and re-allotting the IP address when it collides with devices. However, according to an exemplary embodiment of the present invention, the IP address collision can be prevented in advance by determining if the IP addresses between devices are identical and allotting the IP address if the addresses are not identical, during initialization of the network.

The components of Figure 3 may be included in Figure 4, or integrated into components with similar functions according to the technical embodiments. For example, the first transmitting/receiving unit 320 of Figure 3 and the second receiving unit 410 of Figure. 4 are integrated into a single transmitting and receiving means, or the packet configuration unit 310 may be included in Figure 4.

The individual components shown in Figures 3 and 4 can be implemented by software components or hardware components such as a FPGA (Field-Programmable Gate Array) or an ASIC (Application-Specific Integrated Circuit). However, the components are not limited to software or hardware. The components can be configured in an addressable storage medium or may be configured to execute one or more processors. For example, the components include software, object-oriented software, elements such as classes and tasks, processes, functions, properties, procedures, subroutines, segments of program codes, drivers, firmware, micro-codes, circuits, data, databases, data structures, tables, arrays, and variables. The components can be subdivided into smaller components or a plurality of components may be incorporated into one component.

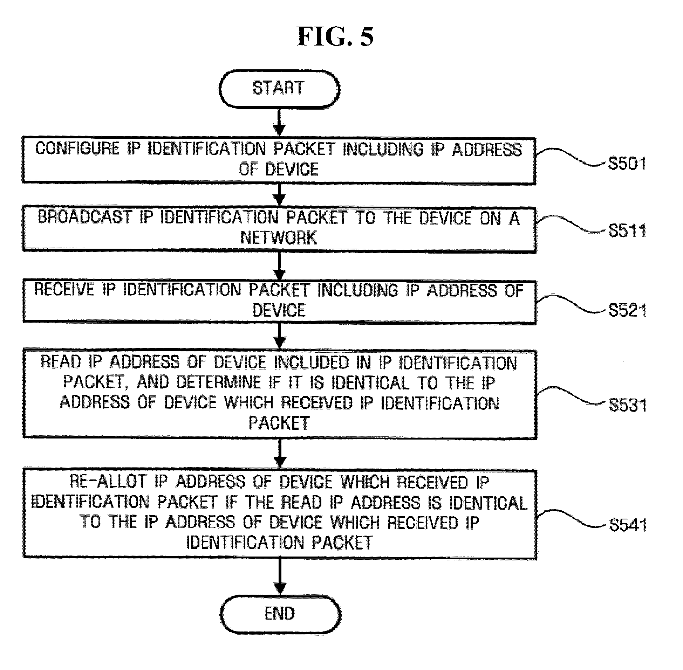

The method of structuring IP identification packets and allotting IP addresses using the apparatus of Figures 3 and 4 is illustrated in Figure 5.

Figure 5 is a flowchart illustrating a method of structuring IP identification packets and allotting IP addresses according to an exemplary embodiment of the present invention.

Repeated descriptions will be omitted in Figures 3 and 4, and each method of structuring IP identification packets and allotting IP addresses will be described in the following.

The IP identification packet is configured during the initialization of various networks such as, IEEE 1394, Ethernet, wireless LAN, and etc, and broadcasted to a device on network The initialization of a network may occur in such a case where a new device is inserted or detached in configuration of the network, when the IP identification packet containing the IP address of a new device is broadcast to a device on the network and contains information about the IP address and other various basic information related to a new device (for example, a port number or a device number). A device on the network compares its IP address and the IP address in the received IP identification packet in order to determine whether the two IP addresses collide. As a result of the determination, if the IP addresses are identical, the device re-allots (changes) its IP address for better IP communication between devices.

First, the IP identification packet containing the IP address of a device is generated by the packet configuration unit 310 for configuration of the IP identification packet (S501). For example, 32-bit IP address of a device can be included in a plurality of IP identification packets, divided into a 16-bit IP address in the upper area and a 16-bit IP address in the bottom area. A plurality of IP identification packets can be broadcast to a device on the network in a sequential order on IEEE 1394 network, divided into 32-bit for each IP identification packet.

The IP identification packet containing the IP address of the device is broadcast to the device on the network via the first transmitting/ receiving unit 320 (S511).

Then, the device which received the IP identification packet performs the following S521 to S541.

The IP identification packet including IP address of the device is received via the second transmitting/receiving unit 410 (S521).

The IP control unit 420 reads out IP address of the device contained in the IP identification packet, and determines if it is identical to the IP address of the device that received the IP identification packet (S531).

If the read IP address is identical to the IP address of the device which received the IP identification packet, the IP address of the device which received the IP identification packet is re-allotted by the IP-allotting unit 430 (S541).

Figure 6 illustrates configuration of an IP identification packet according to an embodiment of the present invention.

As illustrated in Figure 6A, a number field 602 includes information on the device number, and a packet number field 604 includes information on an index of the packet. For example, in case of the packet first to be transmitted is displayed as value 1, and the packet transmitted next is displayed as value 2. The fields 602 and 604 can be omitted in other embodiments.

An IP address field 606 includes information on an IP address of a device. For example, if an IP identification packet includes a plurality of packets, the IP address is included in a plurality of IP identification packets, divided into a 16-bit IP address in the upper area and a 16-bit IP address in the bottom area.

An additional IP identification packet field 808 displays if the additionally transmitted IP identification packet exists or not. For example, if a plurality of IP identification packets are broadcast in a sequential order, the additional IP identification packet field 808 is displayed as the value 1 to indicate that the additionally-transmitted IP identification packet exists.

As illustrated in Figure 6B, an IP address field 606b includes the information on the IP address of a device as described in Figure 6A. For example, if 16-bit IP address in the upper area is included in the IP address field 606 of Figure 6A, the rest 16-bit IP address in the bottom area is included in the IP address field 606b. Therefore, the device which transmitted the IP identification packet over twice can obtain a complete IP address, and the device which received the IP identification packet reads out the IP address to compare it with its IP address. The device converts its IP address if the IP address contained in the IP identification packet is identical to its IP address. Therefore, the collision of IP address can be prevented in advance, and the problem can be solved which was caused by the time delayed until the IP collision between devices has been removed by re-allotting the conventional IP address, and also, the improvement of the network traffic caused during re-allotment of the IP address can be reduced.

As illustrated in Figure 6A, the value of an additional IP identification packet field 808b of the IP identification packet displays whether the additionally-transmitted IP identification packet exists. For example, the additional IP identification packet field 808 is displayed as the value 0 to indicate that the additionally-transmitted IP identification packet does not exist, but it is the last transmitted packet instead.

The content of a number field 602b and a packet number field 604b can be obtained with reference to the fields 602 and 604 in Figure 6A is inspected. In addition, configuration of each field in the individual packets illustrated in Figure 6 can be changed according to technical embodiments, and the required field can be added or deleted, or the length of each filed can be controlled.

The IEEE 1394 specification (IEEE 1394, IEEE 1394a, and others) and EIA/CEA 775-1 specification provide the background for the following disclosure.

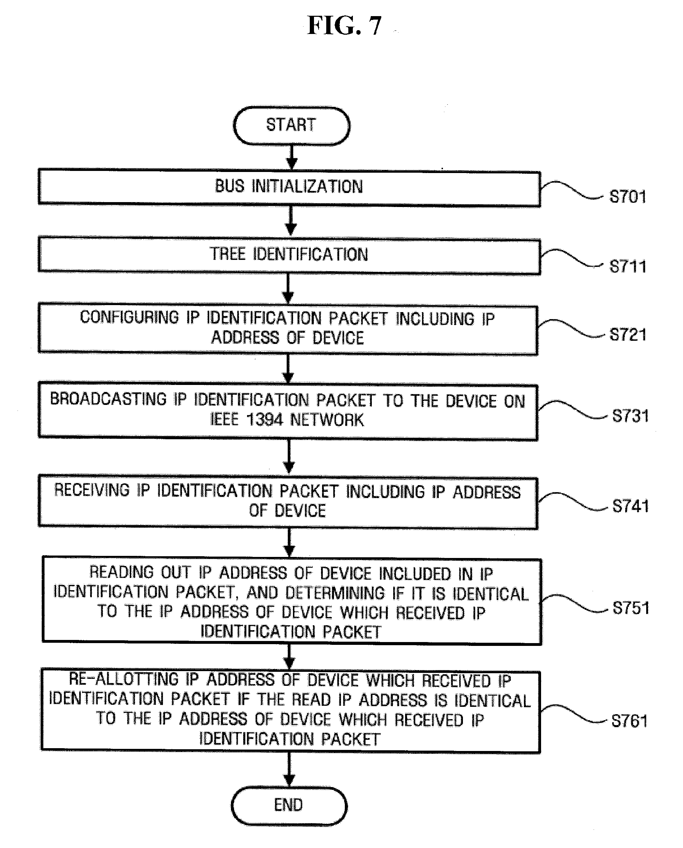

Figure 7 is a flowchart illustrating a method of structuring IP identification packets and allotting IP addresses according to a first embodiment of the present invention.

The method of structuring IP identification packet and allotting IP during initialization of the IEEE 1394 network will now be described.

Initialization of the IEEE 1394 network is accomplished through bus initialization (S701) and tree identification (S711), first. The (S701) and 711 are expected to refer to the description on (S11) and (S12) in Figure 1. Preferably, an IP identification packet for preventing the IP address collision between devices on the network is configured, including the following (S721) to (S761) into (S13) of Figure 1, thereby receiving and transmitting the IP identification packet to a device on the network Hereinafter, detailed description will be made for each step, and the repeated description of Figures 3 and 4 will be omitted.

After S701 and S711, preferably, the self-identification packet (illustrated in Figure 8) is transmitted during (S13) of Figure 1, and the IP identification packet of Figure 6 containing IP address of a device is configured by the configuration unit 310 (S721). The IP address is an address with a predetermined length of a device which broadcasts the IP identification packet, and preferably, it is included in the field of an IP identification packet, as divided 16-bit addresses. In addition, the IP identification packet includes the information on if the IP identification packet has been additionally transmitted. The IP identification packet is preferably constructed of 32-bit packets, and is transmitted. The device that receives the IP identification packet can obtain a complete IP address through the plurality of IP identification packets.

The IP identification packet is transmitted to the device on IEEE 1394 network via the first transmitting/receiving unit (S731). The IP identification packet is broadcast in a sequential order, divided into a plurality of IP identification packets of 32 bit long, and the IP identification packet includes the information whether the IP identification packet has been additionally transmitted. For example, if the IP identification packet has been transmitted additionally, the value 1 is displayed on a predetermined field in IP identification packet. If the IP identification packet has not been transmitted additionally, the value 0 is displayed in a predetermined field in IP identification packet.

Next, the device which received the IP identification packet performs S741 to S761.

The IP identification packet containing the IP address of a device is received by the second transmitting/receiving unit 410 (S741). The IP address is an address, which has a predetermined length, of a device which broadcasts the IP identification packet, and preferably, it is included in the field of an IP identification packet, as divided 16-bit addresses. In addition, the IP identification packet includes information on if the IP identification packet has been additionally transmitted. Therefore, it is possible for the device which received the IP identification packet to know if the additionally transmitted IP identification packet exists by reading the field including the information about if the IP identification packet has been transmitted additionally, and the complete IP address can be obtained by the received IP identification packet. That is, the IP identification packet is transmitted, configured of 32 bit for each packet, and includes a divided 16-bit IP address. Therefore, the device which received the IP identification packet can obtain a complete 32-bit IP address through a plurality of IP identification packets.

The IP control unit 420 reads the IP address of the device included in the IP identification packet, and determines if it is identical to the IP address of the device that received the IP identification packet (S751). The device which received the plurality of IP identification packets determines if its IP address and the IP address included in IP identification packet are identical by comparing them. For example, the IP address is included in the IP identification packet, divided into 16 bit long addresses, in order to be transmitted. Therefore, the device obtains the complete IP address by receiving the IP identification packet twice, and compares its IP address by reading the 32-bit IP address.

If the read IP address is identical to the IP address of a device which received the IP identification packet, the IP address of a device which received the IP identification packet is re-allotted by the IP-allotting unit 430 (S761). If the device has an IP address identical to the IP address in the received IP identification packet, the IP address collision between devices can be prevented in advance by re-allotting and changing the device's IP address.

Figure 8 illustrates configuration of self-identification packet according to a first embodiment of the present invention.

During initialization of the IEEE 1394 network, the information on IP identification packet is further included in the transmitted and received self-identification during(S13).

The self-identification packet is 32 bit, and it is broadcast to a device on the network sequentially. The basic information contained in the field of the first transmitted self-identification packet includes a (physical) number, link active, maximum hop count, speed, IP identification packet supporting, existence of root, power type, port state, start of initialization, and additional self-identification packet.

As illustrated in Figure 8A, in configuration of the self-identification packet to be transmitted first, a number field 802 includes the information on a device number, and a link active field 804 (1-bit long) includes the information on a link active state.

A maximum hop count field 806 includes the information on the maximum hop count of the IEEE 1394 network, and a speed field 808 includes the information on the maximum transmission speed supported by a device (i.e., 100Mbps, 200Mbps, 400 Mbps, and others).

An IP identification packet supporting field 810 includes the information on if the IP identification packet containing IP address is supported. For example, when the value of the IP identification packet supporting field 810 is "01", it means that the IP identification packet is supported. When it is "00", it means that the IP identification packet is not supported, and the conventional process is performed. When the IP identification is supported, the IP identification packet in Figure 6 is transmitted right after the self-identification packet is transmitted.

A root determination field 812 includes the information on if a device can be a root on the network, and if a power type field 814 can support power. A port field 816 includes such an example if ports 0 to 2 exist or they are connected to.

An initialization start field 818 includes the information on a device which started initializing, and an additional self-identification field 820 includes the information on if the additionally transmitted identification packet exists. For example, if the additional self-identification field 820 is 1, the additionally transmitted self-identification packet exists. If the additional self-identification field 820 is 0, the self-identification packet was transmitted last.

As illustrated in Figure 8B, after the first self-identification packet is transmitted, the information contained in the additionally transmitted self-identification packet includes information on a number, packet number, port sate, and an additional self-identification packet.

A 16-bit port state field 816b includes the information on if the maximum 8 ports exist or, are connected. A packet number field 822 includes information on an index of a packet, and for example, the value is 1 in the case of the first-transmitted packet, and the value is 2 in case of the next-transmitted packet. Further, the description of a number field 802b, IP identification packet supporting field 810b, and additional self-identification packet field 820b will be obtained respectively, with reference to the descriptions of the fields 802, 810, and 820 in Figure 8A.

In Figures 8A and 8B, it can be displayed that the self-identification packet (that is, IP identification packet) including the IP address to be additionally transmitted exists, which has been described in Figure 6, the additional self-identification packet fields 820 and 820b all contain the value 1. At this time, the IP identification packet supporting fields 810 and 810b are all filled with value 01, which indicates that the IP identification packet is supported. Therefore, based on the XHT standard, when a new device connected to the IEEE 1394 network is inserted, attached, or detached after S12 in Figure 1, a new device transmits the self-identification packet during S13. Then, an IP identification packet containing its IP address, which was illustrated in Figure 6, is transmitted sequentially.

Configuration of each field in the individual packets illustrated in Figure 8 can be changed according to the technical embodiments, and the required field can be further added or deleted. Besides, the length of each field can be adjusted. The IEEE 1394 specification (IEEE 1394, IEEE 1394a, and others) and the EIA/CEA 775-1 specification are the background for the following disclosure.

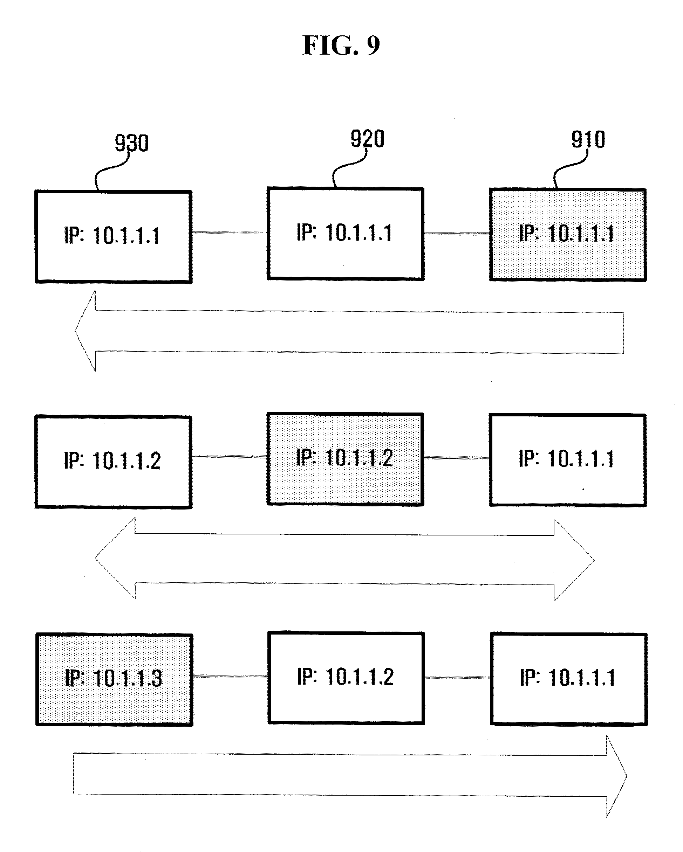

Figure 9 illustrates an embodiment of process of re-allotting IP using IP identification packet according to an embodiment of the present invention.

The IP identification packet is configured during the initialization of various networks such as, IEEE 1394, Ethernet, wireless LAN, and etc, and broadcast to a device on network

First, a device 1 (910) broadcasts the IP identification packet containing its IP address. The IP identification packet contains the IP address of the device 1 910, and can be transmitted after it is divided into a plurality of IP identification packets.

For example, based on the XHT standard, when a new device connected to the IEEE 1394 network is inserted, attached, or detached, after S12 in Figure 1, the device 1 910 located farthest from a root device 930 transmits the self-identification packet and sequentially, transmits the IP identification packet containing its IP address. At this time, the IP identification packet is divided into a plurality of 32-bit IP identification packets, in order to be transmitted twice. The IP identification packet includes the IP address of the device 1 910 divided into 16 bits.

The root device 930 and a device 2 920 which transmitted the IP identification packet from the device 1 910 compares their IP address and the IP address of the device 1 910 in the IP identification packet in order to determine if they are identical. Since IP address of the rest devices 920 and 930 is identical to the device 1 910 with IP address (10.1.1.1), the device 2 920 and the root device 930, for example, respectively convert their IP address into 10.1.1.2.

When the device 2 920 transmits an IP identification packet containing its IP address, the root device 930 having an IP address identical to the device 2 920, for example, converts (re-allots) its IP address into 10.1.1.3, and the device 1 910 keeps its IP address because its IP address and the IP address of the device 2 920 are different.

When the root device 930 transmits the IP identification packet containing its IP address, the device 1 910 and the device 2 920 keep their IP address because their IP address and the IP address of the root device 930 are not identical.

According an aspect of the present invention, an apparatus and method for structuring IP identification packets and allotting IP addresses can prevent IP collision between devices during initialization of a network and reduce the network traffic.

The exemplary embodiments of the present invention have been described for illustrative purposes, and those skilled in the art will appreciate that various modifications, additions and substitutions are possible without departing from the scope of the invention as defined in the accompanying claims. Therefore, the scope of the present invention should be defined by the appended claims.

## Claims

1. An apparatus for structuring an IP identification packet comprising:
a configuration unit (310) configured to generate an IP identification packet containing an IP address of a first device; and
a first transmitting unit (320) configured to broadcast the IP identification packet to a second device on a network during an initialization of the network.

2. The apparatus for structuring the IP identification packet of claim 1, wherein the IP identification packet is divided into a plurality of IP identification packets which are sequentially broadcast, and the IP address of the first device is divided into a plurality of divided IP addresses of equal length, wherein each divided IP address is included in one of the plurality of IP identification packets.

3. The apparatus for structuring an IP identification packet of claim 2, wherein the network is an IEEE 1394 network, the plurality of IP identification packets are 32 bits each, and each of the divided IP addresses is 16 bits.

4. An apparatus for allotting IP addresses comprising:
an IP control unit (420) configured to read an IP address of a first device contained in an IP identification packet received by a second device and determine if the IP address of the first device is identical to an IP address of the second device; and
an IP-allotting unit (430) configured to re-allot the IP address of the second device if the read IP address of the first device and the IP address of the second device are identical.

5. The apparatus for allotting IP addresses of claim 4, wherein the IP identification packet consists of a plurality of IP identification packets which are sequentially received by the second device, wherein the IP control unit (420) is configured to extract from each of the plurality of IP identification packets a divided IP address and determine the IP address of the first device by combining the divided IP addresses.

6. The apparatus for allotting IP addresses of claim 4 or 5, wherein the network is an IEEE 1394 network.

7. The apparatus for allotting IP addresses of claim 5 or 6, wherein the plurality of IP identification packets are 32 bits each, and each of the divided IP addresses is 16 bits.

8. A method of structuring an IP identification packet comprising:
generating an IP identification packet containing an IP address of a first device; and
broadcasting the IP identification packet to a second device on a network during an initialization of the network.

9. The method of structuring an IP identification packet of claim 8, wherein the IP identification packet is divided into a plurality of IP identification packets which are sequentially broadcast, and the IP address of the first device is divided into a plurality of divided IP addresses of equal length, wherein each divided IP address is included in one of the plurality of IP identification packets.

10. The method of structuring an IP identification packet of claim 9, wherein the network is an IEEE 1394 network, the plurality of IP identification packets are 32 bits each, and each divided IP address included in the IP identification packet is 16 bits.

11. A method of allotting IP addresses comprising:
reading an IP address of a first device contained in an IP identification packet received by a second device and determining if it is identical to an IP address of the second device; and
re-allotting the IP address of the second device if the read IP address and the IP address of the second device are identical.

12. The method of allotting IP addresses of claim 11, wherein the IP identification packet consists of a plurality of IP identification packets which are sequentially received by the second device, the method further comprising extracting from each of the plurality of IP identification packets a divided IP address and determining the IP address of the first device by combining the divided IP addresses.

13. The method of allotting IP addresses of claim 11 or 12, wherein the network is an IEEE 1394 network

14. The method of allotting IP addresses of claim 12 or 13, wherein the plurality of IP identification packets are 32 bits each, and each of the divided IP addresses is 16 bits.

15. A computer program comprising code for carrying out the method of any one of claims 8 to 14.
